# DEMANDE DE BREVET EUROPEEN

(11) **EP 1 923 271 A1**
(43) Date de publication de la demande: **21.05.2008**
(21) Numéro de dépôt: 07119536.6
(22) Date de dépôt: 29.10.2007
(51) Int. Cl.: B60R 13/08, B60R 21/34

(54) **Écran de protection embarque pour la sécurité des piétons**

(30) Priorité: 14.11.2006 FR 0654902
(71) Demandeur: PEUGEOT CITROËN AUTOMOBILES S.A., 78140 Vélizy Villacoublay (FR)
(72) Inventeur: Monin, Martine, 92000 Nanterre (FR); Doulat, Anne, 95800 Poissy (FR); Massieux, Michael, 51000 Chalons en Champagne (FR)
(74) Mandataire: Ménès, Catherine

(57) **Abrégé**

L'invention se rapporte à un écran (1) de protection recouvrant la partie haute d'un moteur (2) à combustion interne d'un véhicule automobile.

La principale caractéristique de l'écran selon l'invention, est qu'il possède des zones (7) de faiblesse structurelles, pour faciliter sa rupture vis-à-vis d'une sollicitation extérieure sensiblement verticale.

## Description

Le domaine technique de l'invention concerne les écrans de protection situés entre le moteur d'un véhicule automobile et le capot, et servant de couche intermédiaire pour amortir l'impact de la tête d'un piéton sur le moteur, suite à un choc accidentel. En effet, dans une certaine plage de vitesses, la collision entre un véhicule et un piéton entraîne le pivotement dudit piéton, dont la tête vient percuter le capot sous lequel est logé le moteur. Le capot se déforme sous l'impact, et la tête vient alors heurter le moteur, constituant une pièce lourde et indéformable, augmentant considérablement les risques de fracture du crâne. L'invention consiste à modifier structurellement une pièce déjà existante sur le moteur et occupant une fonction bien particulière au sein dudit moteur, pour la transformer en un écran de protection vis-à-vis d'un piéton, sans pour autant dénaturer sa fonction originelle. Il s'agit, en fait, d'un écran de protection pour le système d'injection, servant, notamment, à contenir le bruit qu'il produit, et à éviter les projections de gazole sous le capot moteur en cas de fuite dudit gazole.

Les écrans de protection vis-à-vis d'un choc piéton existent et ont déjà fait l'objet de brevet. On peut, par exemple, citer le brevet le brevet FR 2879149, qui se rapporte à un écran cache-moteur apte à se déplacer de haut en bas, sous l'effet d'un choc provoqué par un piéton suite à une collision avec un véhicule automobile. L'écran est relié à une tige, dont une extrémité présente une forme telle que, en cas de choc sur l'écran, ladite tige est apte à se déplacer pour déformer ou déchirer un plot de maintien. Le système semble efficace, mais met en oeuvre une multiplicité de pièces, dont la réalisation est coûteuse et dont les interactions sont, quelque peu, compliquées.

Les écrans de protection selon l'invention, qui sont aptes à se rompre sous l'effet d'un impact de piéton, sont de conception simple et n'engendrent l'utilisation d'aucune pièce supplémentaire. De plus, ils demeurent d'un encombrement constant par une légère modification structurelle de sa surface. Ils sont donc parfaitement adaptés aux espaces restreints laissés disponibles dans un véhicule automobile.

La présente invention a pour objet un écran de protection recouvrant la partie haute d'un moteur à combustion interne d'un véhicule automobile. La principale caractéristique d'un écran selon l'invention, est qu'il possède des zones de faiblesse structurelle, pour faciliter sa rupture vis-à-vis d'une sollicitation extérieure sensiblement verticale. Avantageusement, l'écran est positionné entre le moteur et le capot du véhicule. La sollicitation extérieure correspond essentiellement à l'impact de la tête d'un piéton, suite à un choc frontal avec le véhicule. En effet, lors de cet évènement, le piéton a tendance à basculer autour du capot. La tête impacte alors, de haut en bas, ledit capot qui se déforme, puis vient ensuite au contact de l'écran qui finit par se rompre pour amortir le choc. La mise en place de cet écran permet d'éviter à la tête d'impacter directement le moteur, et donc d'empêcher de graves blessures comme des fractures du crâne.

De façon préférentielle, l'écran s'étend sur le système d'injection du moteur. Pour cette configuration, l'écran de protection selon l'invention, est constitué par un écran déjà existant sur le moteur, dont la fonction est à la fois de réduire le bruit du système d'injection et d'éviter les projections de gazole en cas de fuite. Cet écran a juste été modifié par la mise en place de zones de faiblesse structurelle, pour répondre à des impératifs de sécurité vis-à-vis d'un choc piéton, mais conserve toutefois sa fonction originelle.

De façon avantageuse, les zones de faiblesse structurelle correspondent à des zones d'épaisseur réduite.

Préférentiellement, l'écran présente une protubérance bombée et creuse, délimitée par les zones de faiblesse structurelles. En effet, cette protubérance bombée est située en avant de l'écran, de manière à ce que la tête du piéton impacte d'abord ladite protubérance, qui aussitôt se désolidarise dudit écran au niveau desdites zones, par un effet d'emporte-pièce plus ou moins marqué. Dans ce contexte, la protubérance bombée joue le rôle d'un amortisseur pour la tête du piéton.

Avantageusement, les zones de faiblesse structurelle sont assimilables à un sillon en forme de boucle fermée. En effet, la protubérance bombée est délimitée par un sillon faisant une boucle fermée autour d'elle, ledit sillon matérialisant un pré découpage de ladite protubérance pour faciliter sa rupture.

De façon préférentielle, le sillon présente une arête vive pour favoriser la rupture de la protubérance, ladite arête étant longitudinale et suivant le profil du sillon.

De façon avantageuse, le sillon est creusé sur une face de l'écran, située en regard du moteur.

Préférentiellement, le sillon a une section sensiblement en forme de V, la hauteur dudit sillon variant suivant le sens de la largeur pour passer d'une valeur maximale à une valeur nulle. La hauteur du sillon correspond à sa profondeur dans la pièce.

De façon préférentielle, la section en forme de V est dissymétrique, pour notamment favoriser le glissement de la pièce, après la rupture de la partie bombée.

Selon un mode de réalisation préféré de l'invention, le rapport de la largeur du sillon sur sa hauteur, est compris entre 0,5 et 10. En effet, c'est dans cette fourchette de valeurs que l'écran est le plus facile à fabriquer et que la rupture de l'écran est la plus nette.

Avantageusement, l'écran est réalisé en polyamide renforcé en fibres de verre. Selon un autre mode de réalisation préféré de l'invention, il peut être réalisé en polypropylène pour des applications moins sollicitées thermiquement.

De façon préférentielle, l'épaisseur minimale de l'écran au niveau des zones de faiblesse structurelle, est inférieure ou égale à 1,8 mm.

L'invention se rapporte également à un moteur à combustion interne de véhicule automobile comprenant un écran de protection selon l'invention.

Les écrans de protections selon l'invention présentent l'avantage d'être fabriqués facilement, en une seule pièce et sans outillage particulier. Ils sont donc faciles à mettre en oeuvre et peu couteux. Ils ont également l'avantage d'être fabriqués dans des matériaux usuels, ayant pour seules contraintes, de faire barrage aux particules de gazole en cas de fuite, et de se rompre facilement sous l'effet d'un choc vertical. Enfin, ils sont légers et peu encombrants, et sont donc parfaitement adaptés aux exigences des véhicules automobiles en matière de poids et de volume.

On donne ci-après une description détaillée d'un mode de réalisation préféré d'un écran de protection selon l'invention en se référant aux figures 1 à 3.
- La figure 1 est une vue en perspective d'un écran de protection selon l'invention placé sur un moteur de véhicule automobile.
- La figure 2 est une vue en coupe latérale partielle, d'un premier mode de réalisation préféré d'un écran de protection selon l'invention.
- La figure 3 est une vue en coupe latérale partielle, d'un deuxième mode de réalisation préféré d'un écran de protection selon l'invention.

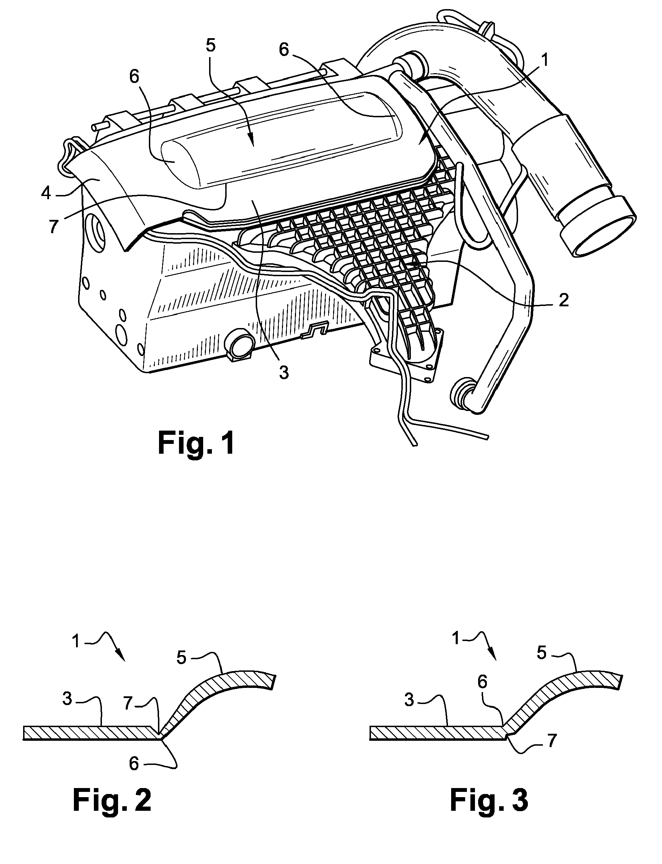

En se référant à la figure 1, un écran 1 de protection selon l'invention est placé en partie haute d'un moteur 2 de véhicule automobile, et en dessous du capot (non représenté). L'écran 1 a la forme d'une pièce globalement plane, recouvrant partiellement ledit moteur 2. De façon plus précise, l'écran 1 possède une embase 3 plane, directement au contact du moteur 2, ladite embase 3 pouvant présenter des rebords 4 incurvés pour épouser au mieux le contour externe du moteur 2, et ainsi être en contact étroit avec celui-ci. L'embase 3 a un contour sensiblement rectangulaire, et entoure une protubérance 5 bombée, située approximativement dans la partie centrale de ladite embase 3. La protubérance 5 émerge de l'embase 3 et se retrouve plus proche du capot que ne l'est ladite embase 3. La protubérance 5 est assimilable à une pièce creuse, de forme allongée et possédant deux extrémités 6 arrondies.

En se référant aux figures 2 et 3, l'embase 3 et la protubérance 5 ont la même épaisseur, à l'exception de leur zone 6 de jointure pour laquelle l'épaisseur est réduite.

En se référant à la figure 2, la zone 6 de jointure est matérialisée par un sillon 7, creusé sur la face supérieure de l'écran 1, située en vis-à-vis du capot. Le sillon 7 délimite le contour de la protubérance 5, et présente une section en forme de V dissymétrique. Le fond du sillon 7 se caractérise par une arête vive. Du côté de l'embase 3, le sillon 7 présente une faible largeur, permettant de mettre en évidence une variation brutale d'épaisseur entre l'embase 3 et le fond du sillon 7. Du côté de la protubérance 5, le sillon 7 présente une variation d'épaisseur beaucoup moins marquée et donc de largeur plus importante.

En se référant à la figure 3, la zone de jointure 6 est matérialisée par un sillon 7, creusé sur la face inférieure de l'écran 1, située en vis-à-vis du moteur 2. Le sillon 7 délimite le contour de la protubérance 5, et présente une section en forme de V symétrique. Pour cette configuration, le sillon 7 n'est pas directement visible en ouvrant le capot du véhicule.

Lors d'un choc entre un véhicule et un piéton, l'écran 1 de protection réagit de la façon suivante :
Le piéton pivote, et vient percuter, tête la première, le capot avant du véhicule. La tête déforme d'abord le capot, et vient ensuite impacter la protubérance 5 bombée de l'écran 1 de protection, ladite protubérance 5 se désolidarisant de l'embase 3 au niveau du sillon 7. Ainsi la tête évite d'impacter le moteur 2, en étant amortie par la protubérance 5 qui se déforme ou se rompt.

## Revendications

1. Ecran (1) de protection recouvrant la partie haute d'un moteur (2) à combustion interne d'un véhicule automobile, ledit écran (1) s'étendant sur le système d'injection dudit moteur (2) et possédant des zones (7) de faiblesse structurelle, pour faciliter sa rupture vis-à-vis d'une sollicitation extérieure sensiblement verticale, **caractérisé en ce que** les zones de faiblesse structurelle correspondent à des zones d'épaisseur réduite (7).

2. Ecran selon la revendication 1, **caractérisé en ce qu'**il présente une protubérance (5) bombée et creuse, délimitée par les zones de faiblesse structurelle (7).

3. Ecran selon l'une quelconque des revendications 1 ou 2, **caractérisé en ce que** les zones de faiblesse structurelle sont assimilables à un sillon (7) en forme de boucle fermée.

4. Ecran selon la revendication 3, **caractérisé en ce que** le sillon (7) présente une arête vive pour favoriser la rupture de l'écran (1).

5. Ecran selon l'une quelconque des revendications 3 ou 4, **caractérisé en ce que** le sillon (7) est creusée sur une face de l'écran, située en regard du moteur.

6. Ecran selon l'une quelconque des revendications 3 à 5, **caractérisé en ce que** le sillon (7) a une section sensiblement en forme de V, la hauteur dudit sillon (7) variant suivant le sens de la largeur pour passer d'une valeur maximale à une valeur nulle.

7. Ecran selon la revendication 6, **caractérisé en ce que** la section en forme de V est dissymétrique.

8. Ecran selon la revendication 6, **caractérisé en ce que** le rapport de la largeur du sillon (7) sur sa hauteur, est compris entre 0,5 et 10.

9. Ecran selon l'une quelconque des revendications précédentes, **caractérisé en ce qu'**il est réalisé en polyamide renforcé en fibres de verre.

10. Ecran selon l'une quelconque des revendications 1 ou 2, **caractérisé en ce que** l'épaisseur minimale de l'écran (1) au niveau des zones de faiblesse structurelle, est inférieure ou égale à 1,8 mm.

11. Moteur (2) à combustion interne de véhicule automobile, **caractérisé en ce qu'**il comprend un écran (1) conforme à l'une quelconque des revendications précédentes.
